# EUROPÄISCHE PATENTSCHRIFT

(11) **EP 3 359 599 B1**
(45) Veröffentlichungstag und Bekanntmachung des Hinweises auf die Patenterteilung: **26.06.2019**
(21) Anmeldenummer: 16739505.2
(22) Anmeldetag: 19.07.2016
(51) Int. Cl.: C08L 21/00, B60C 17/00, B60C 19/12, B60C 5/14, B29C 73/16, B29C 73/18, C09J 11/06, B29D 30/06

(54) **SELBSTDICHTENDER FAHRZEUGLUFTREIFEN**
SELF-SEALING VEHICLE TYRE
PNEU AUTO-COLMATANT POUR VÉHICULE

(30) Priorität: 06.10.2015 DE 102015219296
(43) Veröffentlichungstag der Anmeldung: 15.08.2018
(73) Patentinhaber: Continental Reifen Deutschland GmbH, 30165 Hannover (DE)
(72) Erfinder: DAHLKE, Markus, 31515 Wunstorf (DE); SCHLEER, Nadja, 30451 Hannover (DE); GUARDALABENE, Joe, 30659 Hannover (DE)
(74) Vertreter: Finger, Karsten
(86) Internationale Anmeldenummer: PCT/EP2016/067131
(87) Internationale Veröffentlichungsnummer: WO 2017/059975

(56) Entgegenhaltungen:
- EP-A1- 0 893 236
- EP-A1- 2 042 296
- DE-A1-102006 037 488
- DE-A1-102012 107 606
- DE-A1-102012 108 343
- DE-A1-102014 206 009
- US-A1- 2011 146 860
- US-A1- 2015 273 944

## Beschreibung

Die Erfindung betrifft einen selbstdichtenden Fahrzeugluftreifen mit einem Gürtelpaket, einem radial oberhalb des Gürtelpakets angeordneten Laufstreifen und einer radial innen angeordneten luftdicht ausgeführten Innenschicht, wobei die Selbstdichtung des Fahrzeugluftreifens durch eine nach der Vulkanisation des Fahrzeugluftreifens nachträglich radial innen aufgebrachten Dichtmittellage erhalten ist, wobei die Dichtmittellage im Wesentlichen die Breite des Gürtelpakets aufweist und im Wesentlichen in dessen Projektion angeordnet ist und einen in der die Reifenachse beinhaltenden Querschnittsebene ausgebildeten Querschnitt mit einer in axialer Richtung im Wesentlichen parallel zum Gürtelpaket verlaufenden Oberfläche und einer im Wesentlichen in radialer Richtung verlaufenden Oberfläche aufweist.

Derartige selbstdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.

Das Dichtmittel wird von der Anmelderin unter dem Namen ContiSeal ® eingesetzt. Das Dichtmittel zeichnet sich durch Luftdichtigkeit, starke Klebrigkeit und ausgewogenes Fließ verhalten aus.

Aufgrund der starken Klebrigkeit des Dichtmittels der Dichtmittellage bleiben unerwünschte Fremdkörper, die in das Reifeninnere (z.B. während der Lagerung der Reifen) gelangen, an der Dichtmittellage haften, und zwar hierbei insbesondere an der radial nach innen gerichteten Oberfläche der Dichtmittellage. Die radial nach außen gerichtete Oberfläche haftet an der Innenschicht und ist daher nicht exponiert.

Ferner können Bestandteile, wie insbesondere Amine, aus den die Dichtmittellage umgebenden Kautschukmischungen, insbesondere der Innenschicht, mit Peroxiden und/oder deren Radikalen (radikalischen Spaltprodukten) aus dem Dichtmittel reagieren. Bei den Aminen kann es sich beispielsweise um *tert*-Butylamin aus Beschleunigern wie N-*tert*.-Butyl-2-benzothiazyl-sulfenamid (TBBS) handeln. Diese Amine können sowohl durch Migration und/oder durch Verdampfen und anschließende Kondensation auf die Oberflächen der Reifenbauteile, insbesondere der inneren Reifenbauteile, gelangen. Insbesondere während der Lagerung einer Vielzahl an Reifen in einem begrenzten Raum ist die Konzentration der Amine in der Luft so hoch, dass diese insbesondere auf den inneren Oberflächen der Reifenbauteile kondensieren.

Bei den Peroxiden aus dem Dichtmittel kann es sich im Dibenzoylperoxid und dem zugehörigen Benzoylradikal und/oder *tert*-Butylperoxybenzoat und dem zugehörigen *tert-*Butoxyradikal handeln.

Auch die Peroxide bzw. deren radikalische Spaltprodukte können sich durch Migration und/oder Verdampfen und anschließende Kondensation insbesondere auf den inneren Oberflächen der Reifenbauteile ansammeln.

Die genannten Amine und Peroxide bzw. Radikale können miteinander reagieren und sich hierbei unerwünschte Kristalle bilden, die ebenfalls insbesondere an der Dichtmittellage haften.

Die Aufgabe der vorliegenden Erfindung besteht darin, einen selbstdichtenden Fahrzeugluftreifen bereitzustellen, bei dem keine Fremdkörper (oder nur in sehr geringem Ausmaß) auf der Dichtmittellage im Reifeninneren anhaften und eine Kristallbildung auf der freien Oberfläche im Reifeninneren reduziert oder sogar ganz verhindert wird, wobei die Dichtleistung des Dichtmittels nicht negativ beeinträchtigt werden soll.

Die Aufgabe wird erfindungsgemäß dadurch gelöst, dass wenigstens die in axialer Richtung im Wesentlichen parallel zum Gürtelpaket verlaufende Oberfläche der Dichtmittellage umlaufend eine Beschichtung aufweist, die wenigstens ein Alkalisalz wenigstens einer Fettsäure und/oder wenigstens ein Erdalkalisalz wenigstens einer Fettsäure enthält.

Eine derartige Beschichtung setzt zum einen die Klebrigkeit der radial nach innen gerichteten Oberfläche der Dichtmittellage derart signifikant herab, dass (nahezu) keine unerwünschten Fremdkörper an der Dichtmittellage anhaften.

Zum anderen reduziert das Alkalisalz und/oder Erdalkalisalz wenigstens einer Fettsäure auf der Dichtmittellage das Ausmaß der Reaktion zwischen Aminen aus benachbarten Kautschukmischungen und Peroxiden bzw. deren Radikalen (deren radikalischen Spaltprodukten) aus dem Dichtmittel, sodass eine unerwünschte Kristallbildung auf der beschichteten Dichtmittellage nicht oder nur in nicht signifikantem Ausmaß erfolgt.

Der erfindungsgemäße Fahrzeugluftreifen weist zudem keine negative Beeinträchtigung hinsichtlich der selbstdichtenden Eigenschaften auf.

Bevorzugt wird die Beschichtung als wässrige Suspension aufgetragen, wobei zumindest ein Großteil des in der Suspension enthaltenen Wassers verdampft und eine Beschichtung verbleibt, die wenigstens ein Alkalisalz wenigstens einer Fettsäure und/oder wenigstens ein Erdalkalisalz wenigstens einer Fettsäure enthält.

Hierbei verdampft je nach Verfahren nicht die gesamte Menge des Wassers und eine Restmenge kann somit in der Beschichtung verbleiben.

Gemäß einer bevorzugten Ausführungsform der Erfindung enthält die Beschichtung daher Wasser.

Gemäß einer weiteren bevorzugten Ausführungsform enthält die Beschichtung nur sehr geringe Mengen oder gar kein Wasser, d.h. 0 bis 1 Gew.-% Wasser.

Erfindungswesentlich ist es, dass die Beschichtung eines oder mehrere Salze von Fettsäuren enthält. Hierdurch wird die Klebrigkeit der Oberfläche der Dichtmittellage stark herabgesetzt und die Kristallbildung im Reifeninneren reduziert oder sogar ganz verhindert. Gleichzeitig wird die Dichtleistung des selbstdichtenden Fahrzeugluftreifens mit einer derartigen Beschichtung nicht negativ beeinträchtigt.

Fettsäuren sind dem Fachmann bekannt und stellen gemäß Römpp Online ® 2015 "aliphatische, gesättigte und ungesättigte Carbonsäuren mit bis auf wenige Ausnahmen unverzweigter Kohlenstoff-Kette" dar.

Besonders bevorzugt ist es im Rahmen der vorliegenden Erfindung, wenn die Fettsäure 8 bis 18 Kohlenstoffatome aufweist.

Hierdurch wird die oben beschriebene Reaktion von Aminen mit Peroxiden zu unerwünschten Kristallen besonders effektiv vermieden. Bei der Anzahl von 8 bis 18 Kohlenstoffatomen ist es besonders bevorzugt, wenn es sich um lineare unverzweigte Kohlenstoffketten handelt.

Bevorzugte Fettsäuren, bzw. deren Salze wie unten beschrieben, sind beispielsweise und insbesondere

Octansäure (auch Caprylsäure genannt) mit 8 Kohlenstoffatomen und/oder Tetradecansäure (auch Myristinsäure genannt) mit 14 Kohlenstoffatomen und/oder Hexadecansäure (auch Palmitinsäure genannt) mit 16 Kohlenstoffatomen und/oder Octadecansäure (auch Stearinsäure genannt) mit 18 Kohlenstoffatomen.

Gemäß einer bevorzugten Ausführungsform der Erfindung ist die Fettsäure ausgewählt aus der Gruppe bestehend aus Octansäure und/oder Tetradecansäure und/oder Hexadecansäure und/oder Octadecansäure.

Gemäß einer besonders bevorzugten Ausführungsform der Erfindung handelt es sich bei der Fettsäure wenigstens um Octadecansäure.

Erfindungsgemäß ist die wenigstens eine Fettsäure in Form wenigstens eines Alkali- und/oder Erdalkalisalzes in der Beschichtung enthalten.

Unter "Alkalisalz wenigstens einer Fettsäure" ist im Rahmen der vorliegenden Erfindung das Alkalimetallsalz wenigstens einer Fettsäure zu verstehen, wobei Alkalimetalle in Salzen formal einfach positiv geladen sind, wie beispielsweise und insbesondere die Alkalimetallionen von Lithium (Li⁺), Natrium (Na⁺), Kalium (K⁺), Rubidium (Rb⁺). Bevorzugt handelt es sich bei dem Alkalimetallion des Salzes um Lithium (Li⁺) und/oder Natrium (Na⁺) und/oder Kalium (K⁺).

Die Ionen der Fettsäure sind formal einfach negativ geladen, sodass bei dem Alkalisalz der Fettsäure jeweils ein Alkalimetallion und ein Ion der Fettsäure (Carboxylat-Ion) einer formal neutralen Ladung entsprechen.

Es kann sich bei dem wenigstens einen Alkalisalz wenigstens einer Fettsäure auch um ein Gemisch verschiedener Alkalisalze handeln, bei dem die Alkalimetalle und/oder die Fettsäuren gleich oder verschieden voneinander sind. Das Gleiche gilt für das wenigstens eine Erdalkalisalz wenigstens einer Fettsäure. Auch hier kann es sich um ein Gemisch handeln, bei dem die Erdalkalimetalle und/oder Fettsäuren gleich oder verschieden voneinander sind.

Unter "Erdalkalisalz wenigstens einer Fettsäure" ist im Rahmen der vorliegenden Erfindung das Erdalkalimetallsalz wenigstens einer Fettsäure zu verstehen, wobei Erdalkalimetalle in Salzen formal zweifach positiv geladen sind, wie beispielsweise und insbesondere die Erdalkalimetallionen Beryllium (Be²⁺), Magnesium (Mg²⁺), Calcium (Ca²⁺), usw.

Bevorzugt handelt es sich bei dem Erdalkalimetallion des Salzes um Magnesium (Mg²⁺) und/oder Calcium (Ca²⁺), besonders bevorzugt Calcium (Ca²⁺).

Bei dem Erdalkalisalz der Fettsäure entsprechen ein Erdalkalimetallion und zwei Ionen der Fettsäure einer formal neutralen Ladung.

Gemäß einer bevorzugten Ausführungsform der Erfindung enthält die Beschichtung wenigstens ein Alkalisalz wenigstens einer Fettsäure und wenigstens ein Erdalkalisalz wenigstens einer Fettsäure.

Gemäß einer besonders bevorzugten Ausführungsform der Erfindung ist das Erdalkalisalz wenigstens einer Fettsäure wenigstens Calciumstearat.

Eine geeignete wässrige Suspension, die Calciumstearat und wenigstens ein Alkalisalz wenigstens einer Fettsäure enthält, ist beispielsweise unter dem Handelsnamen Rhenodiv® BO 7672-1 der Firma Rheinchemie erhältlich.

Eine derartige Suspension enthält vor dem Auftragen und Trocknen 58 bis 65 Gew.-% Wasser, 10 bis 20 Gew.-% wenigstens eines Alkalisalzes wenigstens einer Fettsäure, 10 bis 20 Gew.-% Calciumstearat und weniger als 2 Gew.-% Zusatzstoffe bzw. Verunreinigungen.

Im Rahmen der vorliegenden Erfindung bedeutet der Ausdruck "im Wesentlichen" bei der Beschreibung der Anordnung der einzelnen Bauteile des erfindungsgemäßen Fahrzeugluftreifens, dass übliche herstellungsgedingte geringfügige Schwankungen mit eingeschlossen sind.

Die Dichtmittellage weist im Wesentlichen die Breite des Gürtelpakets auf.

Die Dichtmittellage ist im Wesentlichen in dessen Projektion (der Projektion des Gürtelpaketes) angeordnet, d.h. sie verläuft radial innerhalb des Gürtelpaketes im Wesentlichen parallel zu diesem.

Die Dichtmittellage weist einen in der die Reifenachse beinhaltenden Querschnittsebene ausgebildeten Querschnitt mit einer in axialer Richtung im Wesentlichen parallel zum Gürtelpaket verlaufenden Oberfläche und einer im Wesentlichen in radialer Richtung verlaufenden Oberfläche auf.

Die Dichtmittellage weist bevorzugt im Wesentlichen einen rechteckigen Querschnitt auf, wobei sie je nach Ausgestaltung der Reifendimensionen insbesondere in Projektion der Schulterkanten des Gürtelpaketes eine Krümmung aufweisen kann.

Die Dichtmittellage wird nach radial außen durch die Innenschicht und nach radial innen durch ihre radial nach innen gerichtete in axialer Richtung, im Wesentlichen parallel zum Gürtelpaket, verlaufenden Oberfläche begrenzt und zu beiden Seiten, bevorzugt im Wesentlichen symmetrisch, durch die in radialer Richtung, im Wesentlichen senkrecht zum Gürtelpaket, verlaufenden Oberflächen begrenzt.

Um die Klebrigkeit der Dichtmittellage (auf der radial nach innen gerichteten und damit nach innen exponierten Oberfläche) wirksam herabzusetzen, ist die Beschichtung wenigstens auf die radial nach innen gerichtete im Wesentlichen parallel zum Gürtelpaket verlaufende Oberfläche der Dichtmittellage umlaufend aufgebracht.

Da die radial nach innen gerichtete und damit nach innen exponierte Oberfläche der Dichtmittellage üblicherweise rau ist, weist gemäß einer bevorzugten Ausführungsform der Erfindung die Beschichtung eine Dicke von 0,01 bis 1 mm, besonders bevorzugt 0,05 bis 0,15 mm, auf. Eine derartige Dicke gewährleistet die Herabsetzung der Klebrigkeit auch bei kleinen Unebenheiten der Oberfläche der Dichtmittellage und weiterhin wird hiermit die Kristallbildung wirksam verhindert. Gleichzeitig wird bei einer derartigen Dicke eine nicht zu große Menge der Beschichtung (Suspension) aufgetragen, sodass das Reifengewicht und damit das Rollwiderstandsverhalten des erfindungsgemäßen Fahrzeugluftreifens nicht signifikant negativ beeinträchtigt wird.

Die Angabe der Dicke der Beschichtung stellt die in radialer Richtung senkrecht zur axialen Erstreckung der Dichtmittellage gemessene Dicke dar.

Hierbei ist es denkbar, dass die Dicke der Beschichtung in axialer Richtung um 0 bis 0,005 mm variiert.

Gemäß einer bevorzugten Weiterbildung der Erfindung weist zusätzlich wenigstens die in radialer Richtung, im Wesentlichen senkrecht zum Gürtelpaket, verlaufende Oberfläche die Beschichtung, wie oben beschrieben, auf. Hierbei sind beide seitlichen in radialer Richtung verlaufenden Oberflächen der Dichtmittellage gemeint (im oben ausgeführten Querschnitt links und rechts).

Hierdurch ist die gesamte exponierte Oberfläche der Dichtmittellage beschichtet und die Herabsetzung der Klebrigkeit und das Verhindern von Kristallwachstum (wie oben beschrieben) somit über den gesamten Bereich der Dichtmittellage, also auch an den seitlichen Bereichen der Dichtmittellage, wirksam.

Bevorzugt ist die Beschichtung hierbei derart auf die in radialer Richtung verlaufende Oberfläche der Dichtmittellage aufgetragen, dass an beiden Seiten in axialer Richtung eine Überlappung mit der Innenschicht vorhanden ist.

Die axiale Breite der Überlappung beträgt bevorzugt an beiden Seiten jeweils 0,5 bis 10 mm, bevorzugt 0,5 bis 2 mm, besonders bevorzugt 1 mm. Die Beschichtung befindet sich somit in dieser Ausführungsform auf der gesamten Oberfläche der Dichtmittellage und an beiden Seiten jeweils einem in axialer Richtung 0,5 bis 10 mm, bevorzugt 0,5 bis 2 mm, besonders bevorzugt 1 mm, breitem unmittelbar an die Dichtmittellage angrenzenden Abschnitt der Innenschicht.

Hierdurch wird besonders wirksam sichergestellt, dass auch an den Seiten der Dichtmittellage keine Fremdkörper anhaften und sich dort auch keine Kristalle bilden.

Insbesondere durch Verdampfen und anschließende Kondensation von Aminen und Peroxiden bzw. deren radikalischen Spaltprodukten (wie oben beschrieben) können sich auch an den beiden seitlichen Reifeninnenwänden Kristalle bilden.

Hierbei können die genannten Substanzen z.B. vor dem Auftragen der Beschichtung auf die Dichtmittellage bereits verdampft sein und sich anschließend an den beiden seitlichen Reifeninnenwänden niederschlagen. Zudem können insbesondere in einem Reifenlager auch Substanzen aus anderen (benachbarten) Fahrzeugreifen verdampfen und im Reifeninneren kondensieren.

Gemäß einer weiteren bevorzugten Ausführungsform der Erfindung weist daher zusätzlich die radial nach innen gerichtete Oberfläche, und damit die nach innen exponierte Oberfläche, der Innenschicht die oben beschriebene Beschichtung auf.

Die radial nach außen gerichtete Oberfläche der Innenschicht haftet an den radial außerhalb an die Innenschicht angrenzenden Reifenbauteilen und ist daher nicht exponiert. Dadurch, dass auch die Innenschicht im Reifeninneren mit der oben beschriebenen Beschichtung beschichtet ist, wird auch an den beiden seitlichen Reifeninnenwänden ein Kristallwachstum verhindert.

Bevorzugt erstreckt sich die Beschichtung hierbei an beiden Seiten bis zum radial äußeren Erstreckungsende des Wulstkernes. Somit wird die Beschichtung bevorzugt nicht dort aufgetragen, wo der erfindungsgemäße Fahrzeugluftreifen auf der Felge aufsitzt bzw. Kontakt mit der Felge hat, um ein Verrutschen zwischen Reifen und Felge im Kontaktbereich zu vermeiden.

Gemäß dieser Ausführungsform ist, wenn der Reifen auf der Felge sitzt, somit bevorzugt die gesamte innere Oberfläche des Fahrzeugluftreifens lückenlos umlaufend beschichtet. Optisch ist dies u.a. daran erkennbar, dass die Dichtmittellage und die Reifeninnenseiten mit einem Grauschleier belegt sind.

Im Sinne eines einfachen Herstellverfahrens des erfindungsgemäßen Fahrzeugluftreifens, ist die Dicke der Beschichtung auf der Oberfläche der Innenschicht die gleiche wie auf der Oberfläche der Dichtmittellage.

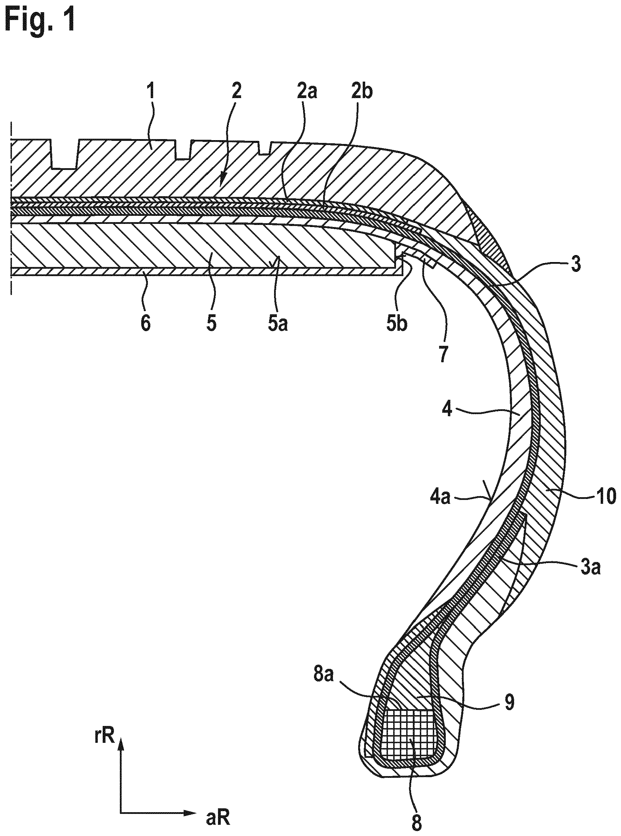

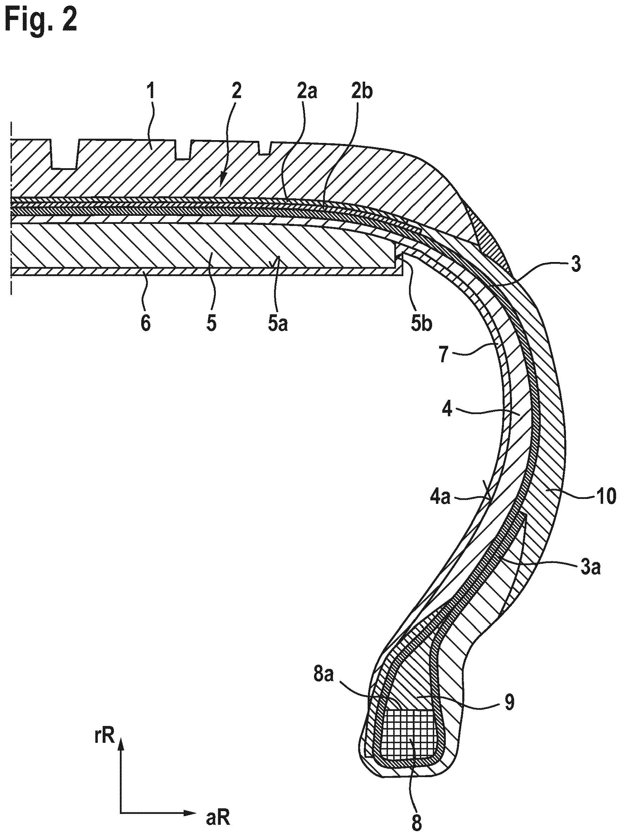

Weitere Merkmale, Vorteile und Einzelheiten der Erfindung werden anhand der Figuren 1 und 2, die schematische Ausführungsbeispiele darstellen, näher erläutert.

Die wesentlichen Bestandteile, aus welchen sich der erfindungsgemäße selbstdichtende Reifen zusammensetzt, sind ein profilierter Laufstreifen 1, ein bei der gezeigten Ausführung aus zwei Lagen 2a, 2b bestehendes Gürtelpaket 2, eine einlagige Karkasse 3, welche um die Wulstkerne 8 und Wulstkernprofile 9 von axial innen nach axial außen herumgeführt ist und im Karkasshochschlag 3a endet, sowie Seitenwände 10. Die beiden Lagen 2a, 2b des Gürtelpakets 2 bestehen aus in eine Gummimischung eingebetteten Festigkeitsträgern aus Stahlcord, welche innerhalb jeder Lage parallel zueinander verlaufen, wobei die Stahlcorde der einen Lage 2a in kreuzender Anordnung zu den Stahlcorden der zweiten Lage 2b orientiert sind und mit der Reifenumfangsrichtung jeweils einen Winkel zwischen 15° und 45° einschließen. Auch die einlagige Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Selbstdichtung des Fahrzeugluftreifens ist durch eine nach der Vulkanisation des Fahrzeugluftreifens nachträglich radial innen umlaufend aufgebrachte Dichtmittellage 5 erhalten. Die Dichtmittellage 5 weist im Wesentlichen die Breite des Gürtelpakets 2 auf und ist im Wesentlichen in dessen Projektion angeordnet und weist einen in der die Reifenachse beinhaltenden Querschnittsebene ausgebildeten Querschnitt mit einer in axialer Richtung im Wesentlichen parallel zum Gürtelpaket verlaufenden Oberfläche 5a und einer im Wesentlichen in radialer Richtung verlaufenden Oberfläche 5b auf. Die Oberfläche 5b ist in axialer Richtung auf beiden Seiten vorhanden und stellt somit umlaufend die seitlichen Begrenzungen der Dichtmittellage dar.

Die Dichtmittellage 5 weist gemäß des Beispiels in Figur 1 auf der in axialer Richtung im Wesentlichen parallel zum Gürtelpaket verlaufenden Oberfläche 5a und zusätzlich auf der im Wesentlichen in radialer Richtung verlaufenden Oberfläche 5b die Beschichtung 6 auf, die wenigstens ein Alkalisalz wenigstens einer Fettsäure und/oder wenigstens ein Erdalkalisalz wenigstens einer Fettsäure enthält.

Beispielsweise enthält die Beschichtung wenigstens ein Alkalisalz wenigstens einer Fettsäure und wenigstens ein Erdalkalisalz wenigstens einer Fettsäure, wobei das Erdalkalisalz wenigstens einer Fettsäure wenigstens Calciumstearat ist. Beispielsweise ist die Fettsäure ausgewählt aus der Gruppe bestehend aus Octansäure und/oder Tetradecansäure und/oder Hexadecansäure und/oder Octadecansäure.

Zudem überlappt die Beschichtung derart an beiden Seiten in axialer Richtung mit der Innenschicht, wobei die Überlappung 7
an jeder Seite jeweils 0,5 bis 10 mm, bevorzugt 0,5 bis 2 mm, besonders bevorzugt zum Beispiel 1 mm beträgt.

Die Dicke der Beschichtung 6 beträgt bevorzugt 0,01 bis 1 mm, insbesondere und beispielsweise 0,05 bis 0,15 mm, besonders bevorzugt 0,1 mm.

Eine derartiger selbstdichtender Fahrzeugluftreifen kann beispielsweise erhalten werden, indem zunächst der Fahrzeugluftreifen hergestellt und anschließend die Dichtmittellage, wie im Stand der Technik bekannt, aufgebracht wird und anschließend eine wässrige Suspension enthaltend wenigstens ein Alkalisalz wenigstens einer Fettsäure und/oder wenigstens ein Erdalkalisalz wenigstens einer Fettsäure, wie beispielsweise Rhenodiv® BO 7672-1 der Firma Rheinchemie, auf sämtliche exponierte Oberflächen der Dichtmittellage und einen in axialer Richtung an jeder Seite jeweils 0,5 bis 10 mm, bevorzugt 0,5 bis 2 mm, besonders bevorzugt zum Beispiel 1 mm, breiten Bereich der Innenschicht aufgebracht und getrocknet wird.

Die Dichtmittellage 5 weist gemäß des Beispiels in Figur 2 auf der in axialer Richtung im Wesentlichen parallel zum Gürtelpaket verlaufenden Oberfläche 5a und zusätzlich auf der im Wesentlichen in radialer Richtung verlaufenden Oberfläche 5b und zusätzlich auf der radial nach innen gerichteten Oberfläche der Innenschicht 4a die Beschichtung 6 auf, die wenigstens ein Alkalisalz wenigstens einer Fettsäure und/oder wenigstens ein Erdalkalisalz wenigstens einer Fettsäure enthält.

Die Beschichtung 6 ist beispielsweise und bevorzugt derart auf die Innenschicht 4a aufgetragen, dass sie sich auf der radial nach innen gerichteten Oberfläche der Innenschicht 4a von der Dichtmittellage 5 an beiden Seiten bis zum radial äußeren Erstreckungsende des Wulstkernes 8a erstreckt.

Eine derartiger selbstdichtender Fahrzeugluftreifen kann beispielsweise erhalten werden, indem zunächst der Fahrzeugluftreifen hergestellt und anschließend die Dichtmittellage, wie im Stand der Technik bekannt, aufgebracht wird und anschließend eine wässrige Suspension enthaltend wenigstens ein Alkalisalz wenigstens einer Fettsäure und/oder wenigstens ein Erdalkalisalz wenigstens einer Fettsäure, wie beispielsweise Rhenodiv® BO 7672-1 der Firma Rheinchemie, auf sämtliche exponierte Oberflächen der Dichtmittellage und die nach radial innen exponierte Oberfläche der Innenschicht bis zum äußeren Erstreckungsende des Wulstkernes aufgebracht und getrocknet wird.

### Bezugszeichenliste

### (Teil der Beschreibung)

1 Laufstreifen
2 Gürtelpaket
2a Gürtellage
2b Gürtellage
3 Karkasse
3a Karkasshochschlag
4 Innenschicht
4a radial nach innen gerichtete Oberfläche der Innenschicht
5 Dichtmittellage
5a radial nach innen gerichtete in axialer Richtung, im Wesentlichen parallel zum Gürtelpaket, verlaufende Oberfläche der Dichtmittellage
5b in radialer Richtung, im Wesentlichen senkrecht zum Gürtelpaket, verlaufende Oberfläche der Dichtmittellage
6 Beschichtung
7 Überlappung
8 Wulstkern
8a radial äußeres Erstreckungsende des Wulstkernes
9 Wulstkernprofil
10 Seitenwand
rR radiale Richtung
aR axiale Richtung

## Patentansprüche

1. Selbstdichtender Fahrzeugluftreifen mit einem Gürtelpaket (2), einem radial oberhalb des Gürtelpakets (2) angeordneten Laufstreifen (1) und einer radial innen angeordneten luftdicht ausgeführten Innenschicht (4), wobei die Selbstdichtung des Fahrzeugluftreifens durch eine nach der Vulkanisation des Fahrzeugluftreifens nachträglich radial innen aufgebrachten Dichtmittellage (5) erhalten ist, wobei die Dichtmittellage (5) im Wesentlichen die Breite des Gürtelpakets (2) aufweist und im Wesentlichen in dessen Projektion angeordnet ist und einen in der die Reifenachse beinhaltenden Querschnittsebene ausgebildeten Querschnitt mit einer in axialer Richtung im Wesentlichen parallel zum Gürtelpaket verlaufenden Oberfläche (5a) und einer im Wesentlichen in radialer Richtung verlaufenden Oberfläche (5b) aufweist, **dadurch gekennzeichnet, dass** wenigstens die in axialer Richtung im Wesentlichen parallel zum Gürtelpaket verlaufende Oberfläche der Dichtmittellage (5a) umlaufend eine Beschichtung (6) aufweist, die wenigstens ein Alkalisalz wenigstens einer Fettsäure und/oder wenigstens ein Erdalkalisalz wenigstens einer Fettsäure enthält.

2. Selbstdichtender Fahrzeugluftreifen nach Anspruch 1, **dadurch gekennzeichnet, dass** die Beschichtung (6) wenigstens ein Alkalisalz wenigstens einer Fettsäure und wenigstens ein Erdalkalisalz wenigstens einer Fettsäure enthält.

3. Selbstdichtender Fahrzeugluftreifen nach einem der vorherigen Ansprüche,
**dadurch gekennzeichnet, dass** die Fettsäure 8 bis 18 Kohlenstoffatome aufweist.

4. Selbstdichtender Fahrzeugluftreifen nach einem der vorherigen Ansprüche,
**dadurch gekennzeichnet, dass** die Beschichtung (6) als Erdalkalisalz wenigstens einer Fettsäure wenigstens Calciumstearat enthält.

5. Selbstdichtender Fahrzeugluftreifen nach einem der vorherigen Ansprüche,
**dadurch gekennzeichnet, dass** die Beschichtung (6) eine Dicke von 0,01 bis 1 mm aufweist.

6. Selbstdichtender Fahrzeugluftreifen nach einem der vorherigen Ansprüche,
**dadurch gekennzeichnet, dass** zusätzlich wenigstens die in radialer Richtung verlaufende Oberfläche (5b) die Beschichtung (6) aufweist.

7. Selbstdichtender Fahrzeugluftreifen nach Anspruch 6, **dadurch gekennzeichnet, dass** die Beschichtung (6) derart auf die Oberfläche (5b) der Dichtmittellage (5) aufgetragen ist, dass an beiden Seiten in axialer Richtung eine Überlappung (7) mit der Innenschicht (4) vorhanden ist.

8. Selbstdichtender Fahrzeugluftreifen nach Anspruch 7, **dadurch gekennzeichnet, dass** die axiale Breite der Überlappung (7) an beiden Seiten jeweils 0,5 bis 10 mm beträgt.

9. Selbstdichtender Fahrzeugluftreifen nach einem der Ansprüche 1 bis 8, **dadurch gekennzeichnet, dass** zusätzlich die radial nach innen gerichtete Oberfläche der Innenschicht (4a) die Beschichtung (6) aufweist.

10. Selbstdichtender Fahrzeugluftreifen nach Anspruch 9, **dadurch gekennzeichnet, dass** sich die Beschichtung (6) auf der radial nach innen gerichteten Oberfläche der Innenschicht (4a) von der Dichtmittellage (5) an beiden Seiten bis zum radial äußeren Erstreckungsende des Wulstkernes (8a) erstreckt.

## Claims

1. Self-sealing pneumatic vehicle tire having a belt package (2), a tread (1) arranged radially above the belt package (2) and an airtight inner layer (4) arranged radially on the inside, wherein the self-sealing of the pneumatic vehicle tire is obtained via a sealant layer (5) subsequently applied radially on the inside after the vulcanization of the pneumatic vehicle tire, wherein the sealant layer (5) has essentially the width of the belt package (2) and is arranged essentially in the projection thereof and has a cross section which is formed in a cross-sectional plane including the tire axis and has a surface (5a) running essentially parallel to the belt package in axial direction and a surface (5b) running essentially in radial direction, **characterized in that** at least the surface of the sealant layer (5a) running essentially parallel to the belt package in axial direction has a circumferential coating (6) that contains at least one alkali metal salt of at least one fatty acid and/or at least one alkaline earth metal salt of at least one fatty acid.

2. Self-sealing pneumatic vehicle tire according to Claim 1, **characterized in that** the coating (6) contains at least one alkali metal salt of at least one fatty acid and at least one alkaline earth metal salt of at least one fatty acid.

3. Self-sealing pneumatic vehicle tire according to either of the preceding claims, **characterized in that** the fatty acid has 8 to 18 carbon atoms.

4. Self-sealing pneumatic vehicle tire according to any of the preceding claims, **characterized in that** at least calcium stearate is present in the coating (6) as alkaline earth metal salt of at least one fatty acid.

5. Self-sealing pneumatic vehicle tire according to any of the preceding claims, **characterized in that** the coating (6) has a thickness of 0.01 to 1 mm.

6. Self-sealing pneumatic vehicle tire according to any of the preceding claims, **characterized in that** at least the surface (5b) running in radial direction additionally has the coating (6).

7. Self-sealing pneumatic vehicle tire according to Claim 6, **characterized in that** the coating (6) has been applied to the surface (5b) of the sealant layer (5) such that there is an overlap (7) with the inner layer (4) on either side in axial direction.

8. Self-sealing pneumatic vehicle tire according to Claim 7, **characterized in that** the axial width of the overlap (7) on each side is 0.5 to 10 mm.

9. Self-sealing pneumatic vehicle tire according to any of Claims 1 to 8, **characterized in that** the surface of the inner layer (4a) directed radially inward additionally has the coating (6).

10. Self-sealing pneumatic vehicle tire according to Claim 9, **characterized in that** the coating (6) on the surface of the inner layer (4a) directed radially inward extends from the sealant layer (5) on either side as far as the radially outer end of the extent of the bead core (8a).

## Revendications

1. Pneu auto-colmatant pour véhicule, comprenant une structure de ceinture (2), une bande de roulement (1) agencée radialement au-dessus de la structure de ceinture (2) et une couche intérieure (4) configurée de manière à être étanche à l'air et agencée radialement à l'intérieur, l'auto-colmatage du pneu pour véhicule étant obtenu par une couche d'agent d'étanchéité (5) appliquée ultérieurement radialement à l'intérieur après la vulcanisation du pneu pour véhicule, la couche d'agent d'étanchéité (5) présentant essentiellement la largeur de la structure de ceinture (2) et étant essentiellement agencée dans sa projection et présentant une section transversale configurée dans le plan de la section transversale comprenant l'axe du pneu avec une surface (5a) qui s'étend dans la direction axiale essentiellement en parallèle de la structure de ceinture, et une surface (5b) qui s'étend essentiellement dans la direction radiale, **caractérisé en ce qu'**au moins la surface de la couche d'agent d'étanchéité (5a) qui s'étend dans la direction axiale essentiellement en parallèle de la structure de ceinture présente sur sa périphérie un revêtement (6), qui contient au moins un sel alcalin d'au moins un acide gras et/ou au moins un sel alcalino-terreux d'au moins un acide gras.

2. Pneu auto-colmatant pour véhicule selon la revendication 1, **caractérisé en ce que** le revêtement (6) contient au moins un sel alcalin d'au moins un acide gras et au moins un sel alcalino-terreux d'au moins un acide gras.

3. Pneu auto-colmatant pour véhicule selon l'une quelconque des revendications précédentes, **caractérisé en ce que** l'acide gras comprend 8 à 18 atomes de carbone.

4. Pneu auto-colmatant pour véhicule selon l'une quelconque des revendications précédentes, **caractérisé en ce que** le revêtement (6) contient en tant que sel alcalino-terreux d'au moins un acide gras au moins du stéarate de calcium.

5. Pneu auto-colmatant pour véhicule selon l'une quelconque des revendications précédentes, **caractérisé en ce que** le revêtement (6) présente une épaisseur de 0,01 à 1 mm.

6. Pneu auto-colmatant pour véhicule selon l'une quelconque des revendications précédentes, **caractérisé en ce qu'**au moins la surface (5b) qui s'étend dans la direction radicale comprend en outre le revêtement (6).

7. Pneu auto-colmatant pour véhicule selon la revendication 6, **caractérisé en ce que** le revêtement (6) est appliqué sur la surface (5b) de la couche d'agent d'étanchéité (5) de telle sorte qu'un chevauchement (7) avec la couche intérieure (4) soit présent sur les deux côtés dans la direction axiale.

8. Pneu auto-colmatant pour véhicule selon la revendication 7, **caractérisé en ce que** la largeur axiale du chevauchement (7) sur les deux côtés est à chaque fois de 0,5 à 10 mm.

9. Pneu auto-colmatant pour véhicule selon l'une quelconque des revendications 1 à 8, **caractérisé en ce que** la surface de la couche intérieure (4a) orientée radialement vers l'intérieur comprend en outre le revêtement (6).

10. Pneu auto-colmatant pour véhicule selon la revendication 9, **caractérisé en ce que** le revêtement (6) sur la surface de la couche intérieure (4a) orientée radialement vers l'intérieur s'étend depuis la couche d'agent d'étanchéité (5) sur les deux côtés jusqu'à l'extrémité d'étendue radialement extérieure de la tringle (8a).
